# EUROPEAN PATENT APPLICATION

(11) **EP 1 731 992 A2**
(43) Date of publication of application: **13.12.2006**
(21) Application number: 06114958.9
(22) Date of filing: 05.06.2006
(51) Int. Cl.: G06F 3/023

(54) **Apparatus and Method for Inputting Characters using Circular Key Arrangement**

(30) Priority: 09.06.2005 KR 2005049476
(71) Applicant: SAMSUNG ELECTRONICS CO., LTD., Suwon-si, Gyeonggi-do (KR)
(72) Inventor: Lee, Jung-won, Gyeonggi-do (KR)
(74) Representative: Waddington, Richard

(57) **Abstract**

An apparatus and method for inputting characters in which one of a plurality of characters can be chosen operate by using directional keys. The plurality of characters are classified into a predetermined number of groups and the directional keys are respectively allocated to the groups. Accordingly, when a user presses one of the directional keys, the characters belonging to the group to which the directional key pressed by the user is allocated can be sequentially chosen by sequentially pressing the directional key.

## Description

An apparatus and method according to the present invention relates to inputting characters, and more particularly, to inputting characters in which one of a plurality of characters can be chosen using directional keys.

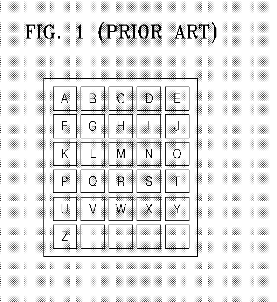

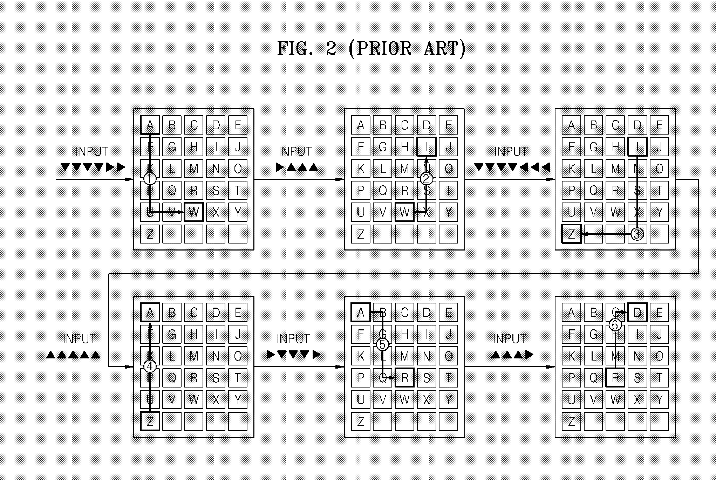

In recent years, the functions of electronic devices have diversified, and thus, an increasing number of electronic devices capable of providing functions that are not provided by pre-existing electronic devices have been developed. For example, TVs are no longer only tools for watching broadcast programs but are also tools for accessing the Internet and obtaining data through the Internet. As the functions provided by electronic devices diversify, data that users need to input to such electronic devices has diversified. However, there is a clear limit to arranging all the keys of a keyboard on small devices such as remote controls or mobile phones. Therefore, on-screen keyboard techniques have been developed in which keys of a keyboard are displayed on a screen of an electronic device and a user chooses the keys using a limited number of directional keys provided on the electronic device. FIG. 1 illustrates a key arrangement of a conventional on-screen keyboard. Character keys of the on-screen keyboard, however, may be arranged in a different manner from the manner illustrated in FIG. 1. FIG. 2 illustrates a method of inputting the word "wizard" using the on-screen keyboard of FIG. 1. Referring to FIG. 2, it is assumed that a cursor is initially located on the character key "A" of FIG. 1. In order to input the character "W", a down key, shown as a downwardly pointing arrow (□) must be pressed 4 times, and then a right key shown as an arrow pointing to the right (► )must be pressed 2 times. In order to input the character "I", the right key (► ) must be pressed once, and then an up key, shown as a upwardly pointing arrow (□) must be pressed 3 times. The total number of directional key inputs required to input the word "WIZARD" in the above-mentioned manner is 31.

However, such conventional methods of inputting characters via an on-screen keyboard using directional keys may suffer from the requirement of selecting a considerable number of directional key inputs for inputting a single word, and a considerable number of input errors may occur, especially when the inputting of a word involves pressing character keys of an on-screen keyboard that are relatively distant from each other. In addition, in the conventional methods, it generally takes a considerable amount of time to input a word, and the inputting of a word is complicated and inconvenient.

Illustrative, non-limiting embodiments of the present invention address the above disadvantages and other disadvantages not described above. Also, the present invention is not required to overcome the disadvantages described above, and an illustrative, non- limiting embodiment of the present invention may not overcome any of the problems described above.

The present invention provides an apparatus and method for inputting characters in which a keyboard has a circular arrangement of keys, and thus the amount of time required for inputting a word, as well as the number of input errors, can be reduced.

According to the present invention there is provided an apparatus and method as set forth in the appended claims. Preferred features of the invention will be apparent from the dependent claims, and the description which follows.

According to an aspect of the present invention, there is provided an apparatus for inputting characters including: a key input unit which is adapted to receive from a user a directional key input corresponding to one of a plurality of directional keys respectively allocated to a plurality of groups into which a plurality of characters are classified; and a character determination unit which is adapted to determine one of the characters belonging to the group to which the directional key corresponding to the received directional key input is allocated as user input based on the received directional key input.

The character determination unit may be adapted to sequentially determine each of the characters belonging to the group to which the directional key corresponding to the received directional key input is allocated to be user input as the user sequentially presses the directional key.

According to another aspect of the present invention, there is provided a method of inputting characters including: receiving from a user a directional key input corresponding to one of a plurality of directional keys respectively allocated to a plurality of groups into which a plurality of characters are classified; and determining one of the characters belonging to the group to which the directional key corresponding to the received directional key input is allocated as user input based on the received directional key input.

The determining may include sequentially determining each of the characters belonging to the group to which the directional key corresponding to the received directional key input is allocated to be user input as the user sequentially presses the directional key.

According to another aspect of the present invention, there is provided a computer-readable medium storing a computer program for executing the method of inputting characters.

According to another aspect of the present invention, there is provided an apparatus for inputting characters including: a plurality of switches respectively corresponding to a plurality of characters arranged in a circle; and a lever located at the center of the switches, wherein the apparatus is adapted to determine the character corresponding to one of the switches that is closed when a user manipulates the lever to be user input.

According to another aspect of the present invention, there is provided an apparatus for inputting characters including: a reception unit which is adapted to receive from a user an input corresponding to one of a plurality of directions respectively allocated to a plurality of characters; and a character determination unit which is operable to determine the character allocated to the direction corresponding to the received input as user input.

For a better understanding of the invention, and to show how embodiments of the same may be carried into effect, reference will now be made, by way of example, to the accompanying diagrammatic drawings in which:
FIG. 1 is a diagram of a key arrangement of a conventional on-screen keyboard;
FIG. 2 is a diagram illustrating a method of inputting a word using the conventional on-screen keyboard illustrated in FIG. 1;
FIG. 3 is a diagram of a key arrangement of an apparatus for inputting characters according to an exemplary embodiment of the present invention;
FIG. 4 is a diagram illustrating a method of inputting characters using the apparatus illustrated in FIG. 3 according to an exemplary embodiment of the present invention;
FIG. 5 is a diagram illustrating a method of inputting characters using the apparatus illustrated in FIG. 3 according to an exemplary embodiment of the present invention;
FIG. 6 is a diagram of a key arrangement of an apparatus for inputting characters according to another exemplary embodiment of the present invention;
FIG. 7 is a diagram of an apparatus having the key arrangement illustrated in FIG. 6 according to an exemplary embodiment of the present invention; and
FIG. 8 is a diagram illustrating a method of inputting characters using the apparatus illustrated in FIG. 7 according to an exemplary embodiment of the present invention.

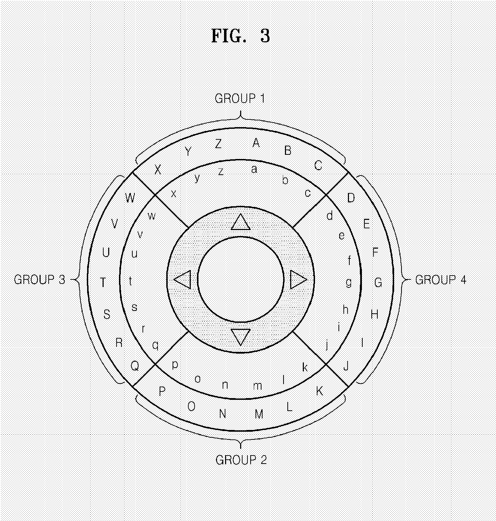

FIG. 3 is a diagram of a key arrangement of an apparatus for inputting characters according to an exemplary embodiment of the present invention. Referring to FIG. 3, 26 alphabet characters are classified into first through fourth groups, and 4 directional keys are respectively allocated to the first through fourth groups. In detail, an up key is allocated to the first group, a down key is allocated to the second group, a left key is allocated to the third group, and a right key is allocated to the fourth group. Therefore, the alphabet characters can be input by pressing the directional keys allocated to the respective groups. In this manner, the number of key inputs required for inputting a series of characters can be reduced. The classification of the alphabet characters may be carried out in various manners. For example, the groups may be organized based on how frequently the alphabet characters generally.

After choosing one of the alphabet characters using the directional keys, the chosen alphabet character may be input by pressing another function key. The user may input lower case characters using a capitalization/decapitalization key. In the present embodiment, the 26 alphabet characters are classified into 4 groups, and the 4 directional keys are respectively allocated to the 4 groups. However, the 26 alphabet characters may be classified into more than 4 groups, and diagonal keys other than the 4 directional keys may be respectively allocated to the groups to which the 4 directional keys are not allocated. The number of groups specified for this embodiment is given as an example as the invention is not limited to the use of alphabet characters nor is it limited to dividing those characters into 4 groups. It will be understand that the invention will operate with other types of characters and either more or fewer groups.

In the present embodiment, one of a plurality of characters can be chosen using directional keys provided on a conventional input device. Therefore, the present embodiment can be easily implemented by adding or appropriately modifying an application without the need to modify the hardware structure of the conventional input device.

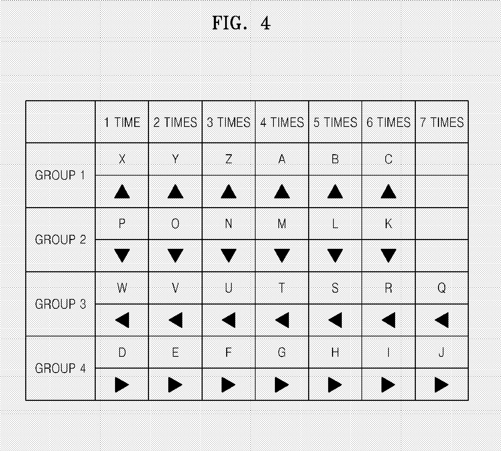

FIG. 4 is a diagram illustrating a method of inputting characters using the apparatus of FIG. 3. Referring to FIG. 3, each of the 26 alphabet characters belongs to one of the 4 groups to which the 4 directional keys are respectively allocated. Each of the 4 groups comprises at least 6 alphabet characters, and thus, each of the alphabet characters belonging to each of the 4 groups may be chosen by pressing the directional key allocated to the corresponding group a predetermined number of times.

Referring to FIG. 4, in order to choose the alphabet character "X", the up key, which is allocated to the first group including the alphabet character "X", must be pressed once. In order to choose the alphabet character "Y", the up key must be pressed twice. In order to choose the alphabet character "Z", the up key must be pressed 3 times. In this manner, the alphabet characters belonging to each of the first through fourth groups can be chosen. Since the 4 directional keys are respectively allocated to the 4 groups, a cursor can be moved from one group to another by pressing a directional key allocated to the other group. For example, assuming that the alphabet character "A" has been input by pressing the up key 4 times, in order to input the alphabet character "W", the left key, which is the directional key allocated to the third group including the alphabet character "W", must be pressed once. In order to input the alphabet characters "A" and "W" in series using the conventional on-screen keyboard, a total of 6 key inputs are required. According to the present embodiment, it is possible to reduce the number of key inputs required to input the alphabet characters "A" and "W" in series from 6 to 1.

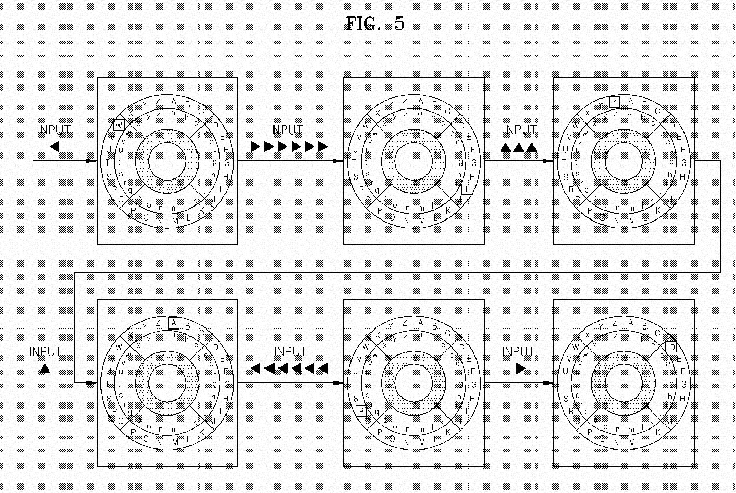

FIG. 5 is a diagram illustrating a method of inputting characters using the apparatus of FIG. 3 according to an embodiment of the present invention. Referring to FIG. 5, in order to input the word "WIZARD", the alphabet character "W" is chosen and input by pressing the left key allocated to the third group including the alphabet character "W" once, the alphabet character "I" is chosen and input by pressing the right key allocated to the fourth group including the alphabet character "I" 6 times, the alphabet character "Z" is chosen and input by pressing the up key 3 times, the alphabet character "A" is chosen and input by pressing the up key once, the alphabet character "R" is chosen and input by pressing the left key 6 times, and the alphabet character "D" is chosen and input by pressing the right key once. According to the current embodiment of the present invention, a total number of 18 directional key inputs are needed to input the word "WIZARD", while in the prior art illustrated in FIG. 2 a total number of 31 directional key inputs are needed to input the word "WIZARD".

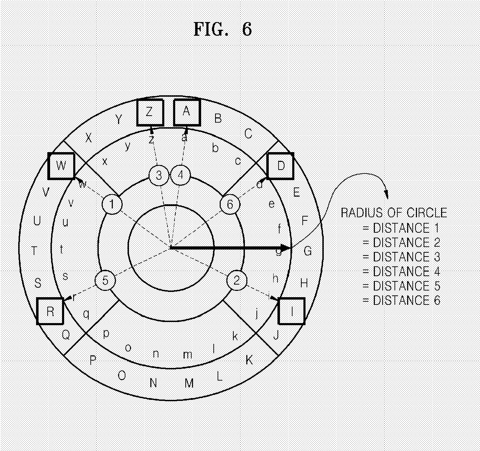

FIG. 6 is a diagram of a key arrangement of an apparatus for inputting characters according to another embodiment of the present invention. Referring to FIG. 6, a keyboard of the apparatus, like the keyboard illustrated in FIG. 3, has a circular arrangement. In the current embodiment of the present invention, unlike in the previous embodiment of the present invention illustrated in FIG. 3, alphabet characters do not need to be classified into groups, and each user input has a certain directivity. Therefore, each of the alphabet characters can be chosen by a single user input. In detail, referring to FIG. 6, 26 alphabet characters are the same distance apart from the center of the keyboard. When a user chooses one of 26 directions, the alphabet character corresponding to the chosen direction is readily input. For example, in order to input the word "WIZARD", 6 directions respectively corresponding to the alphabet characters "W", "I", "Z", "A", "R", and "D" must be respectively chosen only once. Therefore, a total of 6 user inputs are required to input the word "WIZARD". A touch pad or a lever such as a joystick may be used so that each user input has a certain directivity.

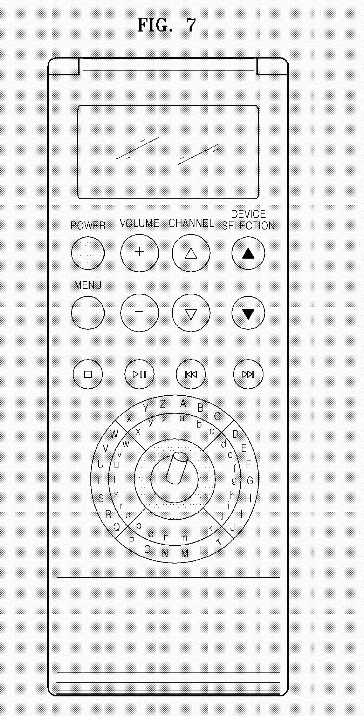

FIG. 7 is a diagram of an apparatus having the key arrangement illustrated in FIG. 6 according to an exemplary embodiment of the present invention. Referring to FIG. 7, the apparatus illustrated in FIG. 6 may be implemented as a remote control. The remote control comprises a keyboard that has a circular key arrangement and a lever that is located at the center of the keyboard enabling a user to choose a certain direction. A plurality of alphabet characters are arranged along the outer circumference of the keyboard so that they can be respectively chosen by moving the lever in a plurality of directions. A plurality of switches (not shown) respectively corresponding to the plurality of directions are installed in the remote control. Accordingly, when the user chooses one of the plurality of directions by manipulating the lever, the switch corresponding to the chosen direction is closed, and thus, a signal for choosing the alphabet character corresponding to the chosen direction is output as a wireless signal using infrared rays.

In the current embodiment, the apparatus for inputting characters is implemented as a remote control. However, the apparatus for inputting characters according to embodiments of the present invention may be implemented as any type of device such as a mobile phone or a personal digital assistant (PDA).

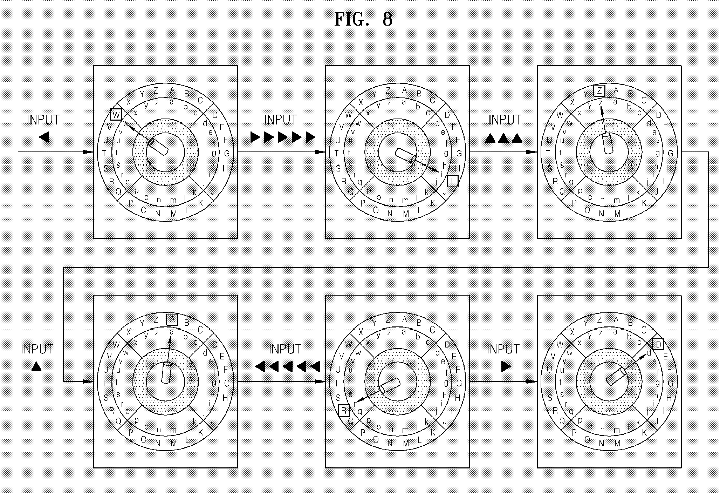

FIG. 8 is a diagram illustrating a method of inputting characters using the apparatus illustrated in FIG. 7 according to an exemplary embodiment of the present invention. Referring to FIG. 8, in order to input the word "WIZARD", a user can choose and input each of the alphabet characters of the word "WIZARD" by simply tilting the lever in the directions respectively corresponding to the alphabet characters. Therefore, the user only needs to manipulate the lever 6 times to input the word "WIZARD", thereby considerably reducing the amount of time required to input each of the alphabet characters of the word "WIZARD".

Embodiments of the present invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, and an optical data storage. Embodiments of the invention can use a carrier wave (e.g., data transmission through the Internet) on which computer-readable instructions that carry out the invention are carried.

According to the present invention, a plurality of alphabet characters provided on an apparatus for inputting characters are classified into groups. Therefore, a user can quickly and precisely input characters using only a limited number of directional keys. In addition, a keyboard of the apparatus may have a circular key arrangement. Therefore, it is possible to minimize the amount of time required to input characters by enabling the user to choose each of a plurality of characters respectively corresponding to a plurality of directions through a single lever manipulation.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for inputting characters, comprising:
a key input unit which is adapted to receive from a user a directional key input corresponding to one of a plurality of directional keys respectively allocated to a plurality of groups into which a plurality of characters are classified; and
a character determination unit which is adapted to determine, as user input, one of the characters belonging to the group to which the directional key corresponding to the received directional key input is allocated, wherein the user input is determined based on the received directional key input.

2. The apparatus of claim 1, wherein the character determination unit is adapted to sequentially determine each of the characters belonging to the group to which the directional key corresponding to the received directional key input is allocated, to be user input as the user sequentially presses the directional key.

3. A method of inputting characters, comprising:
receiving from a user a directional key input corresponding to one of a plurality of directional keys respectively allocated to a plurality of groups into which a plurality of characters are classified; and
determining, as user input, one of the characters belonging to the group to which the directional key corresponding to the received directional key input is allocated based on the received directional key input.

4. The method of claim 3, wherein the determining comprises sequentially determining each of the characters belonging to the group to which the directional key corresponding to the received directional key input is allocated, to be user input as the user sequentially presses the directional key.

5. A computer-readable medium storing a computer program for inputting characters, the computer program comprising,
program instructions for receiving from a user a directional key input corresponding to one of a plurality of directional keys respectively allocated to a plurality of groups into which a plurality of characters are classified; and
program instructions for determining, as user input, one of the characters belonging to the group to which the directional key corresponding to the received directional key input is allocated based on the received directional key input.

6. The computer-readable medium of claim 5, wherein the determining comprises sequentially determining each of the characters belonging to the group to which the directional key corresponding to the received directional key input is allocated, to be user input as the user sequentially presses the directional key.

7. An apparatus for inputting characters, comprising:
a plurality of switches respectively corresponding to a plurality of characters ; and
a lever located at the center of the switches,
wherein the apparatus is adapted to determine as user input the character corresponding to one of the switches that is closed in response to a user manipulating the lever.

8. The apparatus of claim 7, wherein the lever is a joystick.

9. The apparatus of claim 8, wherein the switches are arranged in a circle.

10. An apparatus for inputting characters, comprising:
a reception unit which is adapted to receive from a user an input corresponding to one of a plurality of directions respectively allocated to a plurality of characters; and
a character determination unit which is adapted to determine as user input the character allocated to the direction corresponding to the received input.

11. A method of inputting characters, comprising:
receiving from a user an input corresponding to one of a plurality of directions respectively allocated to a plurality of characters; and
determining as user input the character allocated to the direction corresponding to the received input.

12. A computer-readable medium storing a computer program for inputting characters, comprising,
program instruction for receiving from a user an input corresponding to one of a plurality of directions respectively allocated to a plurality of characters; and
program instructions for determining as user input the character allocated to the direction corresponding to the received input.
